Europäisches Patentamt

European Patent Office

Office européen des brevets

(11) Publication number: **0 331 825**
A1

## (12) EUROPEAN PATENT APPLICATION

(21) Application number: 88301968.9

(22) Date of filing: 07.03.88

(51) Int. Cl.⁴ **B01D 33/04** , **B01D 33/36**

(43) Date of publication of application:
**13.09.89 Bulletin 89/37**

(84) Designated Contracting States:
**AT BE CH DE ES FR GB GR IT LI LU NL SE**

(71) Applicant: **MEI TAI CO., LTD.**
**4F., No. 25, Tun Hua S. Road**
**Taipei(TW)**

(72) Inventor: **Niemzig, Hajo**
**4F., No. 25, Tun Hua S. Road**
**Taipei(TW)**

(74) Representative: **Barlow, Roy James et al**
**J.A.KEMP & CO. 14, South Square Gray's Inn**
**London WC1R 5EU(GB)**

(54) Filter band cleaning device.

(57) A filter band cleaning device comprising two
water pipes (11, 12) disposed in parallel, a plurality
of nozzles (16) a linkage (13), a switch and a driving
mechanism (14); the two water pipes moving in
opposite directions relative to each other by means
of the linkage in combination with the driving mecha-
nism (14); and the water pipes performing the water
spraying function only when moving horizontally,
thereby effecting the cleaning of the filter band (17)
while serving the purpose of saving energy and
water.

Fig.1

## TITLE OF THE INVENTION: FILTER BAND CLEANING DEVICE

### BACKGROUND OF THE INVENTION

The present invention relates to a filter band cleaning device and, more particularly, to a device used in typical sludge dewatering and food juice refiners for cleaning the filter bands therein.

In typical sludge dewatering apparatus and food juice refiners, the filter bands must be either continuously or intermittently cleaned to prevent the filter bands from being clogged, thereby to maintain filtering efficiency. So far, the "Stamm System" is used with the aforesaid sludge dewatering apparatus and refiners for cleaning the filter bands which system, in general, functions by means of a nozzle and a water pressure of 6 bars. According to experiences, pressing malt juice requires an atmospheric pressure of 70 bars to have the filter bands thoroughly cleaned. Therefore, there is no doubt that enormous energy and water would have to be spent when the "Stamm System" is used for cleaning the filter bands.

Rotatable nozzles for the purpose of thoroughly cleaning filter bands have been developed. However, such nozzles are found to have defects in that, while the rotating nozzles are capable of making two rounds of spraying so that 80% of the surface area of the filter band are cleaned, an additional 40% of water and energy would have to be spent in order that the remaining 20% of surface area are to be cleaned.

### SUMMARY OF THE PRESENT INVENTION

The main object of the present invention is to provide a filter band cleaning device which saves energy and water and which is inexpensive to manufacture.

Upon further study of the specification and appended claims, further objects and advantages of this invention will become apparent to those skilled in the art.

### BRIEF DESCRIPTION OF THE DRAWINGS

A preferred embodiment of the present invention will now be described in greater detail with reference to the accompanying drawings in which:

Fig. 1 is a side elevational view of the filter band cleaning device according to the present invention;

Fig. 2 is a schematic view showing water being sprayed on the filter band from the nozzle of the present invention; and

Fig. 3 is a schematic view showing the water coverage on the filter band after spraying according to the present invention.

### DETAILED DESCRIPTION OF THE PREFERRED EMBODIMENT

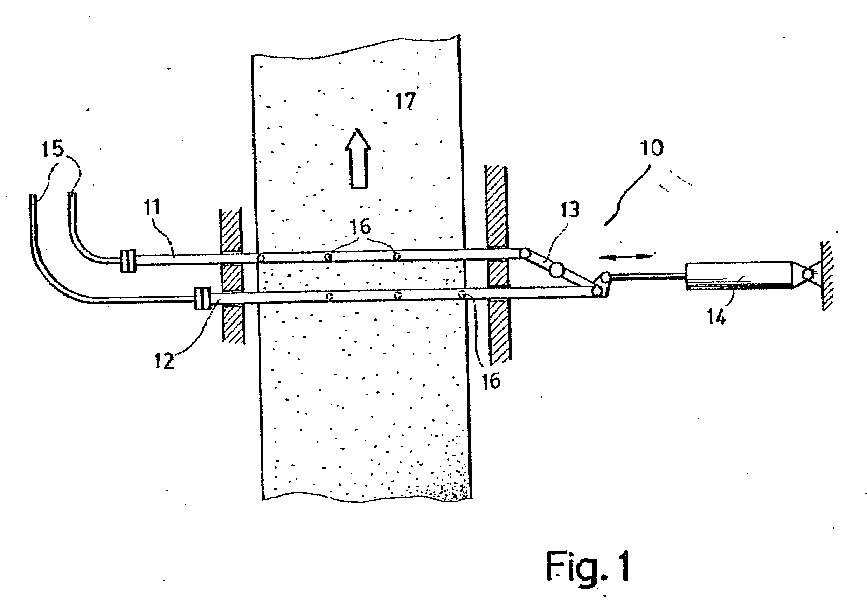

As shown in Fig. 1, the filter band cleaning device (10) of the present invention comprises a first water pipe (11), a second water pipe (12), a linkage means (13), switch means (not shown) and a driving means (14). The first and second pipes (11) and (12) are disposed in paralled relative to each other with each being in communication at one end on the same side with a water supply into which water under pressure can be introduced. A pluraity of nozzles (16) are provided longitudinally along said water pipes (11) and (12), respectively, through which water under pressure can be sprayed onto a filter band (17). Each nozzle (16) has a bore preferably of 2.5 mm in diameter and a spraying angle of about 90°. Nozzles (16) are evenly spaced along said water pipes (11, 12), preferably with a distance between adjacent nozzles being 75 mm.

One end of the first and second water pipes (11) and (12) on the same side are slidably connected to a linkage means (13), said linkage means (13) cooperating with said driving means (14) provides said first and second water pipes (11) and (12) to move in opposite directions relative to each other. More particularly, when said linkage means (13) is actuated by the driving means (14), said first water pipe (11) will move to the left and said second water pipe (12) will move to the right. A switch means (not shown) for controlling of the opening and closing of the nozzles (16) is designed to open these nozzles so as to perform spraying only when said first pipe (11) or said second pipe (12) is moving to the position of said driving means (14).

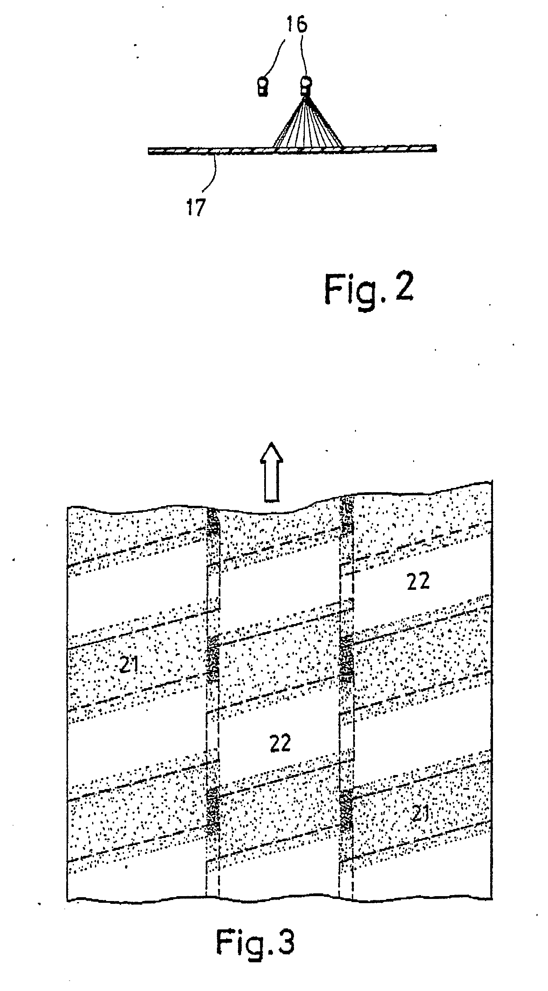

Referring again to Fig. 1, said filter band (17) moves in the direction as shown by the arrow. Referring to Fig. 3, which illustrates the water sprayed coverage on said filter band (17) after said filter band being sprayed with water by the filter band cleaning device (10) of the present invention. As shwon in Fig. 3, the portion (21) is the area sprayed by said first pipe (11) and the portion (22) is the area sprayed by said second pipe (12). It can be seen that the filter band cleaning device of the present invention can be used to clean filter bands in a way which is more economical in energy and water consumption.

While, herein a particular embodiment has been shown and described, it will be obvious to those skilled in the art that changes and modifications may be made without departing from the spirit of the invention, and that it is intended by the appended claim to cover all such modifications as fall within the scope of the invention.

## Claims

1. A filter band cleaning device comprising:
a first and a second pipes disposed in parallel with each communicating at one end on the same side with a water supply into which water under pressure can be introduced;
a plurality of nozzles evenly spaced and provided longitudinally along said first and second pipes, so that water under pressure can be sprayed therethrough within an angle;
a linkage means connecting the ends on the other side of said first and second pipes at the ends thereof, by means of the movement of said linkage means, said first and second pipes moving in opposite directions relative to each other;
a driving means having a reciprocating motion being coorperated with said linkage means such that when said linkage means is actuated, said first and second pipes move horizontally and in opposite direction to each other in reciprocation motion.

Fig. 1

16

17

## Fig. 2

22

21

22

21

## Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 537 584 (E.G. McDONALD) <br> * Column 3, lines 5-23 * <br> ----- | 1 | B 01 D 33/04 <br> B 01 D 33/36 |
| | | | **TECHNICAL FIELDS SEARCHED (Int. Cl.4)** |
| | | | B 01 D |

The present search report has been drawn up for all claims

| Place of search | Date of completion of the search | Examiner |
|---|---|---|
| THE HAGUE | 03-11-1988 | DE PAEPE P.F.J. |

EPO FORM 1503 03.82 (P0401)